# EUROPEAN PATENT APPLICATION

(11) **EP 4 835 357 A1**
(43) Date of publication of application: **04.11.2026**
(21) Application number: 24911870.4
(22) Date of filing: 09.09.2024
(51) Int. Cl.: F24C 15/10, H05B 6/12

(54) **COOKER TOP PLATE AND METHOD FOR MANUFACTURING COOKER TOP PLATE**

(30) Priority: 27.12.2023 JP 2023221282
(71) Applicant: Nippon Electric Glass Co., Ltd., Otsu-shi, Shiga 520-8639 (JP)
(72) Inventor: FUKUI, Etsuji, Otsu-shi, Shiga 520-8639 (JP)
(74) Representative: Tetzner, Michael
(86) International application number: PCT/JP2024/032228
(87) International publication number: WO 2025/141976

(57) **Abstract**

Provided are: a cooker top plate having excellent dirt resistance; and a method for manufacturing the cooker top plate. A cooker top plate (1) includes: a glass substrate (2) having a cooking surface (2a) on which a cooking utensil is to be put and a back surface (2b) on an opposite side to the cooking surface (2a); and a decorative layer (3) disposed on the cooking surface (2a) side of the glass substrate (2), wherein the decorative layer (3) contains a glass and a pigment, and the pigment contains an extender pigment having an average particle diameter of not more than 1.5 µm and is substantially free of titanium oxide.

## Description

### [Technical Field]

The present invention relates to cooker top plates and methods for manufacturing cooker top plates.

### [Background Art]

A cooker top plate is provided at the top of an electromagnetic cooker, a radiant heater cooker, a gas cooker or the like. Generally, the cooker top plate is provided with a clear or opaque glass substrate having: a cooking surface on which a cooking utensil is to be put; and a back surface on the side opposite to the cooking surface. Furthermore, a decorative layer may be further provided on the top of the cooking surface of the glass substrate in order to increase the aesthetic quality of the cooker top plate.

For example, Patent Literature 1 describes a cooker top plate that includes a decorative layer provided on the cooking surface side of a glass substrate and containing glass and refractory filler powder.

During use of a cooker, a cooking utensil, such as a pot, often makes contact with the decorative layer on the cooking surface of the cooker top plate. For example, when the bottom of the pot is strongly rubbed against the decorative layer, the coating on the pot bottom may be peeled off, the metal of the pot bottom may be scraped, and they may be transferred as dirt onto the decorative layer. The transferred dirt significantly deteriorates the design quality of the cooker top plate.

### [Citation List]

### [Patent Literature]

[PTL 1]
JP-A-2016-156570

### [Summary of Invention]

### [Technical Problem]

In recent years, there has been an increasing interest of consumers in design quality. Therefore, cooker top plates are required to have a low likelihood of producing dirt due to peeling or the like of the coating or metal of a cooking utensil, such as a pot, even when the cooking utensil is rubbed on the cooker top plates, i.e., have excellent dirt resistance.

In view of the above, the present invention is aimed at providing: a cooker top plate having excellent dirt resistance; and a method for manufacturing the cooker top plate.

### [Solution to Problem]

Based on the idea that in order to increase the dirt resistance of a decorative layer provided on a cooking surface of a glass substrate, the surface state (specifically, the surface roughness) of the decorative layer should be appropriately controlled, the inventor adjusted the type and the average particle diameter of a pigment in the decorative layer and, thus, found that a cooker top plate having excellent dirt resistance and a method for manufacturing the cooker top plate can be provided.

Specifically, a cooker top plate of aspect 1 in the present invention includes: a glass substrate having a cooking surface on which a cooking utensil is to be put and a back surface on an opposite side to the cooking surface; and a decorative layer disposed on the cooking surface side of the glass substrate, wherein the decorative layer contains a glass and a pigment, and the pigment contains an extender pigment having an average particle diameter of not more than 1.5 µm and is substantially free of titanium oxide. Herein, "substantially free of" means that, for example, the content in the decorative layer is 0.05% by mass or less per 100% by mass of the decorative layer.

A cooker top plate of aspect 2 in the present invention is the cooker top plate according to aspect 1, wherein, preferably, the pigment further contains a color pigment other than titanium oxide, and the decorative layer contains, per 100% by mass thereof, 60 to 99% by mass of the glass, 0.1 to 30% by mass of the color pigment, and 0.1 to 30% by mass of the extender pigment.

A cooker top plate of aspect 3 in the present invention is the cooker top plate according to aspect 2, wherein the extender pigment preferably has a Mohs hardness of not more than 5.

A cooker top plate of aspect 4 in the present invention is the cooker top plate according to aspect 2 or 3, wherein the extender pigment preferably contains barium sulfate.

A cooker top plate of aspect 5 in the present invention is the cooker top plate according to aspect 4, wherein a content of the barium sulfate per 100% by mass of the decorative layer is preferably less than 20% by mass.

A cooker top plate of aspect 6 in the present invention is the cooker top plate according to aspect 4 or 5, wherein a content of the barium sulfate and a content of the color pigment per 100% by mass of the decorative layer preferably satisfy the following inequality: 0.1 ≤ (the content of the barium sulfate)/((the content of the barium sulfate)+(the content of the color pigment)) ≤ 0.85.

A cooker top plate of aspect 7 in the present invention is the cooker top plate according to any one of aspects 1 to 6, wherein the decorative layer preferably has an arithmetic mean roughness Ra of not more than 0.72 µm.

A cooker top plate of aspect 8 in the present invention includes: a glass substrate having a cooking surface on which a cooking utensil is to be put and a back surface on an opposite side to the cooking surface; and a decorative layer disposed on the cooking surface side of the glass substrate, wherein the decorative layer contains a glass and a pigment, the pigment contains a color pigment other than titanium oxide, and a surface of the decorative layer has an arithmetic mean roughness Ra of less than 0.61 µm.

A method for manufacturing a cooker top plate of the present invention is a method for manufacturing the cooker top plate according to any one of aspects 1 to 8 and includes the steps of: preparing a glass substrate having a cooking surface on which a cooking utensil is to be put and a back surface on an opposite side to the cooking surface; applying to the cooking surface of the glass substrate a paint containing a glass frit and a pigment, the pigment containing an extender pigment with an average particle diameter of not more than 1.5 µm and being substantially free of titanium oxide; and heating the glass substrate to which the paint is applied, thus forming a decorative layer.

### [Advantageous Effects of Invention]

The present invention enables provision of: a cooker top plate having excellent dirt resistance; and a method for manufacturing the cooker top plate.

### [Brief Description of Drawings]

[Fig. 1]

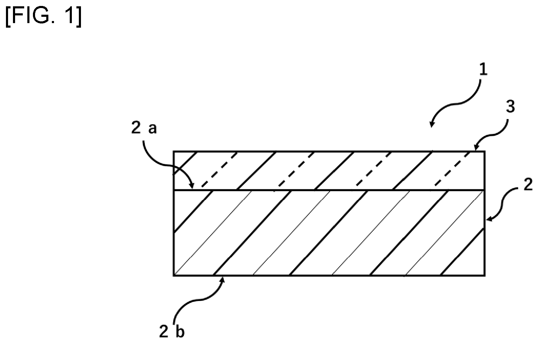

Fig. 1 is a schematic cross-sectional view showing a cooker top plate according to an embodiment of the present invention.

### [Description of Embodiments]

Hereinafter, a description will be given of a preferred embodiment. However, the following embodiment is merely illustrative and the present invention is not limited to the following embodiment. Throughout the drawings, members having substantially the same functions may be referred to by the same reference characters.

Herein, "cooker top plate" may be abbreviated as "top plate".

A cooker top plate 1 shown in Fig. 1 includes a glass substrate 2. The glass substrate 2 has a cooking surface 2a and a back surface 2b. The cooking surface 2a and the back surface 2b are surfaces opposed to each other. The cooking surface 2a is a surface located on the side of the substrate where a cooking utensil, such as a pot or a frying pan, is to be put. The back surface 2b is a surface located toward the interior of the cooker and facing toward a light source and a heater. Therefore, the cooking surface 2a and the back surface 2b are front and back sides of the same substrate. A decorative layer 3 is disposed on the top of the cooking surface 2a of the glass substrate 2. The cooking surface 2a of the glass substrate 2 adjoins the decorative layer 3.

Hereinafter, a description will be given of details of the members and layers constituting the top plate 1.

### (Glass Substrate)

The type of the glass substrate 2 is not particularly limited. For example, the glass substrate 2 may be a white glass substrate or a clear glass substrate. Herein, "clear" of the glass substrate means that the light transmittance in a visible wavelength range of 450 nm to 700 nm is 70% or more.

The top plate 1 undergoes heating and cooling repeatedly. Therefore, the glass substrate 2 preferably has high thermal shock resistance and a low coefficient of thermal expansion. Specifically, the softening temperature of the glass substrate 2 is preferably not lower than 700°C and more preferably not lower than 750°C. Furthermore, the average coefficient of linear thermal expansion of the glass substrate 2 at 30°C to 750°C is preferably in a range of -10 × 10⁻⁷/°C to +60 × 10⁻⁷/°C, more preferably in a range of -10 × 10⁻⁷/°C to +50 × 10⁻⁷/°C, and even more preferably in a range of -10 × 10⁻⁷/°C to +40 × 10⁻⁷/°C. Therefore, the glass substrate 2 is preferably made of a low-expansion glass or crystallized glass having a high glass transition temperature. Specific examples of the low-expansion crystallized glass include "N-11" and "N-0" manufactured by Nippon Electric Glass Co., Ltd., which are LAS (Li₂O-Al₂O₃-SiO₂)-based crystallized glasses. A borosilicate glass substrate or the like may be used as the glass substrate 2.

The thickness of the glass substrate 2 is not particularly limited. The thickness of the glass substrate 2 can be appropriately selected according to the output temperature, structure or so on of the cooker. The thickness of the glass substrate 2 may be, for example, about 2 mm to about 6 mm.

### (Decorative Layer)

The decorative layer 3 is disposed on the top of the cooking surface 2a of the glass substrate 2. The decorative layer 3 has a single-layered structure. However, without impairing the dirt resistance that the present invention aims at achieving, the decorative layer 3 may have a double-layered structure or a structure consisting of three or more layers. In these cases, the layers may have different content ratios among constituents or the same content ratio among constituents.

The decorative layer 3 contains a glass and a pigment and the pigment contains an extender pigment having an average particle diameter of not more than 1.5 µm and is substantially free of titanium oxide. Thus, the surface state of the decorative layer 3 can be appropriately controlled (specifically, the surface can be smoothened). Therefore, even when a cooking utensil or the like is rubbed on the decorative layer, coating peeled off from the bottom surface of the cooking utensil is less likely to stick as dirt to the decorative layer 3. As a result, a cooker top plate having excellent dirt resistance can be achieved. The reason why the decorative layer 3 can be appropriately controlled in terms of surface state by containing an extender pigment having an average particle diameter of not more than 1.5 µm is not clear, but can be considered as follows: the more the decorative layer contains an extender pigment having a small average particle diameter, the less likely the flow of molten glass frit is to be interfered with and the more likely the surface of the decorative layer 3 is to be smoothened. Titanium oxide is a pigment commonly used as a white color pigment, but the inventor found that when the decorative layer 3 contains titanium oxide, the arithmetic mean roughness Ra of the surface of the decorative layer 3 tends to be high. Therefore, since the decorative layer 3 is substantially free of titanium oxide, the surface of the decorative layer 3 can be easily smoothened.

The decorative layer 3 preferably contains a glass, a color pigment other than titanium oxide, and an extender pigment having an average particle diameter of not more than 1.5 µm and more preferably contains, with 100% by mass as the total amount of all the materials of the decorative layer 3, 60 to 99% by mass of glass, 0.1 to 30% by mass of color pigment other than titanium oxide, and 0.1 to 30% by mass of extender pigment having an average particle diameter of not more than 1.5 µm. Thus, the decorative layer 3 becomes a layer having a color. Therefore, for example, when the decorative layer 3 has a function of a display layer for displaying information, the decorative layer 3 can increase the dirt resistance while clearly displaying the information.

Hereinafter, a description will be given of components and so on contained in the decorative layer 3.

### (Glass Component)

The decorative layer 3 contains a glass. Specifically, the decorative layer 3 contains a glass matrix. Examples of the glass composition of the glass include borosilicate-based glasses, aluminoborosilicate-based glasses, silicate-based glasses containing at least one of an alkali metal component and an alkaline earth metal component, and phosphate-based glasses containing zinc and aluminum. The glass matrix may be composed of a single type of glass or two or more types of glass.

The content of the glass in the decorative layer 3 is preferably not less than 60% by mass, more preferably not less than 70% by mass, even more preferably not less than 75% by mass, preferably not more than 99% by mass, more preferably not more than 98% by mass, and even more preferably not more than 95% by mass. When the content of the glass is within the above range, the surface state of the decorative layer 3 can be easily appropriately controlled and, therefore, the dirt resistance can be easily increased and the scratch resistance can also be increased.

### (Pigment)

The decorative layer 3 contains a pigment. The pigment contains an extender pigment having an average particle diameter of not more than 1.5 µm. The average particle diameter of the extender pigment is preferably not more than 1.2 µm, more preferably not more than 1 µm, and particularly preferably not more than 0.5 µm. When the average particle diameter of the extender pigment is not more than the above upper limit, the surface state of the decorative layer 3 can be easily appropriately controlled and, therefore, the dirt resistance of the decorative layer 3 can be further increased. The lower limit of the average particle diameter of the extender pigment is not particularly limited, but may be, for example, not less than 0.005 µm, in which case the dispersibility of pigment in the paint can be further increased.

The average particle diameter of the extender pigment is a median diameter derived from a volume distribution measured by the laser diffraction scattering method.

The Mohs hardness of the extender pigment itself is preferably not more than 5, more preferably not more than 4.5, even more preferably not more than 4, and particularly preferably not more than 3.5. If the Mohs hardness of the extender pigment is more than the above upper limit, the decorative layer 3 is likely to scrape a cooking utensil when making contact with the cooking utensil and is therefore likely to decrease the dirt resistance.

The shape of the extender pigment is not particularly limited and may be scaly, spherical, acicular, irregular or so on.

Examples of the extender pigment include mica, talc, boron nitride, zinc oxide, glass beads, silica beads, barium sulfate, and beads containing an organic group, such as phenyl polysiloxane, methyl polysiloxane, methyl phenyl polysiloxane or organo-functionalized polysiloxane. The extender pigment may be used as a single type or in combination of two or more types. From the viewpoint of further exerting the effects of the present invention, the extender pigment more preferably contains barium sulfate. Barium sulfate has a Mohs hardness of 3, which makes it less likely that the decorative layer 3 scrapes a cooking utensil when making contact with the cooking utensil.

The content of extender pigment in the decorative layer 3 is preferably not more than 30% by mass, more preferably not more than 25% by mass, even more preferably less than 20% by mass, preferably not less than 0.1% by mass, more preferably not less than 1% by mass, and particularly preferably not less than 3% by mass. When the content of extender pigment is within the above range, the effects of the present invention can be further exerted. The content of extender pigment is a content when the total amount of all the materials contained in the decorative layer 3 is assumed to be 100% by mass.

When the extender pigment in the decorative layer 3 is barium sulfate, the content of barium sulfate in the decorative layer 3 is preferably not more than 30% by mass, more preferably not more than 25% by mass, even more preferably less than 20% by mass, preferably not less than 1% by mass, and more preferably not less than 3% by mass. When the content of barium sulfate is within the above range, the effects of the present invention can be further exerted. The content of barium sulfate is a content when the total amount of all the materials contained in the decorative layer 3 is assumed to be 100% by mass.

When the extender pigment in the decorative layer 3 is barium sulfate, the upper limit of the ratio of the content of barium sulfate in the decorative layer to the content of barium sulfate and glass in the decorative layer, i.e., (the content of barium sulfate)/((the content of barium sulfate)+(the content of glass)), is preferably not more than 0.5, more preferably not more than 0.3, and even more preferably not more than 0.2, and the lower limit thereof is preferably not less than 0.01, more preferably not less than 0.03, and even more preferably not less than 0.05. When the ratio is within the above range, the surface state of the decorative layer 3 can be easily appropriately controlled and, therefore, the dirt resistance can be easily increased.

The pigment is substantially free of titanium oxide. Therefore, the decorative layer 3 is substantially free of titanium oxide. Thus, the smoothness of the surface of the decorative layer 3 can be increased.

For example, when the decorative layer 3 is used as a display layer for displaying information, the pigment preferably contains a color pigment other than titanium oxide. Thus, when the display layer is viewed from any angle, the information can be seen clearly. Titanium oxide has a significant effect of scattering surrounding light, such as a fluorescent light or an LED, in the interior of the cooker, which makes the information less visible when the display layer is viewed obliquely.

The type of the color pigment is not particularly limited so long as it is a colored inorganic substance. Examples of the color pigment include: white pigment powders, such as ZrO₂ powder, and ZrSiO₄ powder; blue inorganic pigment powders containing Co; green inorganic pigment powders containing Co; Ti-Sb-Cr-based or Ti-Ni-based yellow inorganic pigment powders, Co-Si-based red inorganic pigment powders; brown inorganic pigment powders containing Fe; and black inorganic pigment powders containing Cu. The color pigment may be used as a single type or in combination of two or more types.

Examples of the blue inorganic pigment powders containing Co include Co-Al-based and Co-Al-Ti-based inorganic pigment powders. An example of the Co-Al-based inorganic pigment powders is CoAl₂O₄ powder. An example of the Co-Al-Ti-based inorganic pigment powders is CoAl₂O₄-TiO₂-Li₂O powder.

Examples of the green inorganic pigment powders containing Co include Co-Al-Cr-based and Co-Ni-Ti-Zn-based inorganic pigment powders. An example of the Co-Al-Cr-based inorganic pigment powders is Co(Al, Cr)₂O₄ powder. An example of the Co-Ni-Ti-Zn-based inorganic pigment powders is (Co, Ni, Zn)₂TiO₄ powder.

Examples of the brown inorganic pigment powders containing Fe include Fe-Zn-based inorganic pigment powders. An example of the Fe-Zn-based inorganic pigment powders is (Zn, Fe)Fe₂O₄ powder.

Examples of the black inorganic pigment powders containing Cu include Cu-Cr-based inorganic pigment powders and Cu-Fe-based inorganic pigment powders. Examples of the Cu-Cr-based inorganic pigment powders include Cu(Cr, Mn)2O4 powder and Cu-Cr-Mn powder. An example of the Cu-Fe-based inorganic pigment powders is Cu-Fe-Mn powder.

The average particle diameter of the color pigment is preferably not more than 10 µm, more preferably not more than 5 µm, particularly preferably not more than 3 µm, preferably not less than 0.01 µm, more preferably not less than 0.1 µm, and particularly preferably not less than 0.5 µm. When the average particle diameter of the color pigment is not more than the above upper limit, the surface state of the decorative layer 3 can be easily appropriately controlled and, therefore, the dirt resistance of the decorative layer 3 can be further increased. When the average particle diameter of the color pigment is not less than the above lower limit, the dispersibility of the color pigment in the paint can be further increased.

The content of color pigment in the decorative layer 3 is preferably not more than 30% by mass, more preferably not more than 25% by mass, even more preferably not more than 20% by mass, preferably not less than 0.1% by mass, more preferably not less than 1% by mass, and particularly preferably not less than 3% by mass. When the content of color pigment is within the above range and, for example, in the case where the decorative layer 3 is used as a display layer for displaying information, the decorative layer 3 can further exert the effects of the present invention while clearly displaying the information. In applications where the decorative layer 3 is desired to have clearness, the decorative layer 3 is preferably free of color pigment. The content of color pigment is a content when the total amount of all the materials contained in the decorative layer 3 is assumed to be 100% by mass.

The upper limit of the ratio of the content of barium sulfate in the decorative layer to the content of barium sulfate and color pigment in the decorative layer, i.e., (the content of barium sulfate)/((the content of barium sulfate)+(the content of color pigment)), is preferably not more than 0.85, more preferably not more than 0.8, and even more preferably not more than 0.78, and the lower limit thereof is preferably not less than 0.05, more preferably not less than 0.1, and even more preferably not less than 0.2. When the ratio is not more than the above upper limit, and, for example, in the case where the decorative layer 3 is used as a display layer for displaying information, the decorative layer 3 can easily clearly display the information. On the other hand, when the ratio is not less than the above lower limit, the dirt resistance can be easily increased.

### (Other Details of Decorative Layer 3)

The arithmetic mean roughness Ra of the decorative layer 3 is preferably not more than 0.72 µm, more preferably not more than 0.65 µm, even more preferably less than 0.61 µm, and particularly preferably not more than 0.6 µm. The lower limit of the arithmetic mean roughness Ra is preferably not less than 0.1 µm, more preferably not less than 0.2 µm, and even more preferably not less than 0.3 µm. If the arithmetic mean roughness Ra is more than the above upper limit, upon rubbing of a cooking utensil, such as a pot, on the decorative layer 3, metal, coating or the like at the bottom surface of the cooking utensil is likely to be scraped and stick as dirt to the decorative layer 3, which is unfavorable. On the other hand, if the arithmetic mean roughness Ra is smaller than the above lower limit, upon rubbing of a cooking utensil on the decorative layer 3, the contact area between the cooking utensil and the decorative layer 3 becomes excessively large and, thus, the frictional force produced between them becomes large, which makes it likely that the dirt resistance decreases contrariwise and is therefore unfavorable.

The arithmetic mean roughness Ra can be measured using Mitutoyo SJ-210 in a method based on JIS B0601:2001.

The Mohs hardness of the surface of the decorative layer 3 is preferably 3 to 7, more preferably 4 to 6, and particularly preferably 5 to 6. If the Mohs hardness of the surface of the decorative layer 3 is more than the above upper limit, metal, coating or the like at the bottom surface of a cooking utensil is likely to be scraped by the surface of the decorative layer 3 and, therefore, the dirt resistance of the decorative layer 3 is likely to decrease. On the other hand, if the Mohs hardness of the surface of the decorative layer 3 is less than the above lower limit, the surface of the decorative layer 3 is likely to be scratched by a cooking utensil or the like.

The Mohs hardness of the surface of the decorative layer 3 can be measured with any known Mohs scale and, for example, a Mohs scale (MH-10R) manufactured by Narika Corporation can be used.

The thickness of the decorative layer 3 is preferably 0.1 to 20 µm, more preferably 1 to 10 µm, even more preferably 2 to 8 µm, and particularly preferably 3 to 7 µm. When the thickness of the decorative layer 3 is within the above range, the decorative layer 3 can be easily appropriately controlled in terms of surface state by containing pigment having an average particle diameter of less than 0.1 µm and, therefore, the dirt resistance of the decorative layer 3 can be easily increased.

### (Method for Manufacturing Cooker Top Plate)

The cooker top plate 1 can be manufactured, for example, by the following manufacturing method.

First, a paste for forming a decorative layer 3 is prepared to contain a glass frit and an extender pigment having an average particle diameter of not more than 1.5 µm. Next, the paste for forming a decorative layer 3 is applied to a surface of the glass substrate 2 which will serve as a cooking surface 2a, dried, and baked.

For example, screen printing can be used as the method for applying the past for forming a decorative layer 3. The drying temperature of the paste for forming a decorative layer 3 may be, for example, a temperature not lower than 50°C and not higher than 150°C. The drying time of the paste for forming a decorative layer 3 may be, for example, not less than five seconds and not more than 50 hours. The baking temperature of the paste for forming a decorative layer 3 may be, for example, a temperature not lower than 600°C and not higher than 950°C. The baking time of the paste for forming a decorative layer 3 may be, for example, not less than ten minutes and not more than two hours.

Although the description in the first embodiment described so far has been given of, as shown in Fig. 1, a structure of the cooker top plate when including a glass substrate and a decorative layer disposed on a cooking surface of the glass substrate, a shield layer may be disposed on the back surface of the glass substrate in the cooker top plate according to the present invention.

Furthermore, the decorative layer may be disposed on the entire cooking surface of the glass substrate (i.e., daubed all over the cooking surface) or may be disposed on a portion of the cooking surface and function as a display layer that displays information.

Alternatively, a cooker top plate may include: a glass substrate having a cooking surface on which a cooking utensil is to be put and a back surface on an opposite side to the cooking surface; and a decorative layer disposed on the cooking surface side of the glass substrate, wherein the decorative layer contains a glass and a pigment, the pigment contains a color pigment other than titanium oxide, and the surface of the decorative layer has an arithmetic mean roughness Ra of less than 0.61 µm. Also in this case, the cooker top plate can exert the effects of the present invention.

### [Examples]

Hereinafter, a description will be given in further detail of the present invention with reference to examples. However, the following examples are merely illustrative. The present invention is not at all limited by the following examples.

The following glass substrate was prepared.
Clear crystallized glass sheet ("N-0" manufactured by Nippon Electric Glass Co., Ltd., average coefficient of linear thermal expansion at 30°C to 750°C: 0.5 × 10⁻⁷/°C, thickness: 4 mm)

The following materials for a decorative layer were prepared.

### <Glass Component>

Glass frit ("Frit NPF" manufactured by Nippon Electric Glass Co., Ltd., average particle diameter: 3.5 µm)

### <Pigment>

### Extender pigment

Barium sulfate A (average particle diameter: 0.01 µm, Mohs hardness: 3)
Barium sulfate B (average particle diameter: 0.03 µm, Mohs hardness: 3)
Barium sulfate C (average particle diameter: 0.3 µm, Mohs hardness: 3)

### Color pigment

Black pigment (Cu-Cr-Mn-based oxide powder, average particle diameter: 1.6 µm, Mohs hardness: 7)
White pigment (titanium oxide, average particle diameter: 0.15 µm, Mohs hardness: 7)

### <Resin Binder>

### (Example 1)

The glass frit, barium sulfate B, the black pigment, and the resin binder were mixed to give a mass ratio (glass frit to barium sulfate B to black pigment to resin binder) of 80:5:15:200, thus preparing a paste for forming a decorative layer. Next, the paste for forming a decorative layer was screen printed, with 0.5 mm wide lines arranged at 5 mm pitch, on a cooking surface of the clear crystallized glass sheet to have a thickness of approximately 3.7 µm after being fired. Subsequently, the paste was dried by the application of heat at 80°C for one minute and then fired at 830°C for 30 minutes, thus forming a decorative layer. The resin binder was fully volatilized by the drying by the application of heat. Table 1 describes the respective contents of components in the decorative layer after the drying and firing.

### (Examples 2 to 9 (Ex. 2 to Ex. 9) and Comparative Examples 1 to 4 (CEx. 1 to CEx. 4))

Cooker top plates were obtained in the same manner as in Example 1 except that the content ratio among components in the decorative layer was changed to those described in Table 1 below and their thickness after being fired was approximately 3 to 6 µm.

### [Evaluation]

### (1) Dirt Resistance of Decorative Layer

First, clay and sand were put into a stainless steel pot having a bottom surface with a 200±10 mm diameter to adjust the total weight to 2.0 kg. Next, the operation of moving the stainless steel pot back and forth over 50 mm on the decorative layer at a speed of approximately 1 m/s while bringing the bottom surface of the stainless steel pot into contact with the decorative layer was repeated 100 times. Thereafter, the decorative layer was visually observed to evaluate it in terms of the degree of dirt having stuck to the decorative layer due to the scraped pot bottom (the dirt resistance) according to the criteria below.

### <Dirt Resistance>

O: No visible dirt stuck to the decorative layer.
X: Dirt stuck to the decorative layer.

**[Table 1]**

| | | | | Ex. 1 | Ex. 2 | Ex. 3 | Ex. 4 | Ex. 5 | Ex. 6 | Ex. 7 | Ex. 8 | Ex. 9 | Comp. Ex.1 | Comp. Ex.2 | Comp. Ex.3 | Comp. Ex.4 |
|---|---|---|---|---|---|---|---|---|---|---|---|---|---|---|---|---|
| | Glass | | % by mass | 80 | 80 | 80 | 80 | 80 | 80 | 80 | 80 | 80 | 88 | 84 | 80 | 80 |
| | Extender pigment | Barium sulfate A (average particle diameter 0.01µm) | | 0 | 0 | 0 | 5 | 10 | 15 | 0 | 0 | 0 | 0 | 0 | 0 | 0 |
| | | Barium sulfate B (average particle diameter 0.03µm) | | 5 | 10 | 15 | 0 | 0 | 0 | 0 | 0 | 0 | 0 | 0 | 0 | 0 |
| | | Barium sulfate C (average particle diameter 0.3µm) | | 0 | 0 | 0 | 0 | 0 | 0 | 5 | 10 | 15 | 0 | 0 | 0 | 5 |
| | Color pigment | Cu-Cr-Mn (black pigment) | | 15 | 10 | 5 | 15 | 10 | 5 | 15 | 10 | 5 | 4 | 4 | 4 | 0 |
| Decorative Layer | | TiO₂ (white pigment) | | 0 | 0 | 0 | 0 | 0 | 0 | 0 | 0 | 0 | 8 | 12 | 16 | 15 |
| | total | | | 100 | 100 | 100 | 100 | 100 | 100 | 100 | 100 | 100 | 100 | 100 | 100 | 100 |
| | Barium sulfate/ (Barium sulfate+ Color pigment) | | - | 0.25 | 0.5 | 0.75 | 0.25 | 0.5 | 0.75 | 0.25 | 0.5 | 0.75 | 0 | 0 | 0 | 0.25 |
| | Barium sulfate/ (Glass + Barium sulfate) | | - | 0.06 | 0.11 | 0.16 | 0.06 | 0.11 | 0.16 | 0.06 | 0.11 | 0.16 | 0 | 0 | 0 | 0.06 |
| | Surface roughness (Ra) | | µm | 0.49 | 0.59 | 0.41 | 0.42 | 0.51 | unmeasured | 0.44 | 0.47 | 0.42 | 0.83 | 0.75 | 0.734 | 0.61 |
| | Mohs hardness | | - | 6 | 6 | 6 | 6 | 6 | 6 | 6 | 6 | 6 | 6 | 6 | 6 | 6 |
| Evaluation | Dirt resistance of decorative Layer | | - | ○ | ○ | ○ | ○ | ○ | ○ | ○ | ○ | ○ | × | × | × | × |

As is obvious from Table 1, the top plates in Examples 1 to 9 in which the decorative layer contained an extender pigment having an average particle diameter of not more than 1.5 µm and was substantially free of titanium oxide exhibited higher dirt resistance than the top plates in Comparative Examples 1 to 3 free of extender pigment having an average particle diameter of not more than 1.5 µm and the top plates in Comparative Example 4 containing titanium oxide.

### [Reference Signs List]

- 1: cooker top plate
- 2: glass substrate
- 2a: cooking surface
- 2b: back surface
- 3: decorative layer

## Claims

1. A cooker top plate comprising:
a glass substrate having a cooking surface on which a cooking utensil is to be put and a back surface on an opposite side to the cooking surface; and
a decorative layer disposed on the cooking surface side of the glass substrate,
wherein the decorative layer contains a glass and a pigment, and
the pigment contains an extender pigment having an average particle diameter of not more than 1.5 µm and is substantially free of titanium oxide.

2. The cooker top plate according to claim 1, wherein
the pigment further contains a color pigment other than titanium oxide, and
the decorative layer contains, per 100% by mass thereof, 60 to 99% by mass of the glass, 0.1 to 30% by mass of the color pigment, and 0.1 to 30% by mass of the extender pigment.

3. The cooker top plate according to claim 2, wherein the extender pigment has a Mohs hardness of not more than 5.

4. The cooker top plate according to claim 2 or 3, wherein the extender pigment contains barium sulfate.

5. The cooker top plate according to claim 4, wherein a content of the barium sulfate per 100% by mass of the decorative layer is less than 20% by mass.

6. The cooker top plate according to claim 4, wherein a content of the barium sulfate and a content of the color pigment per 100% by mass of the decorative layer satisfy the following inequality: 0.1 ≤ (the content of the barium sulfate)/((the content of the barium sulfate)+(the content of the color pigment)) ≤ 0.85.

7. The cooker top plate according to claim 2 or 3, wherein the decorative layer has an arithmetic mean roughness Ra of not more than 0.72 µm.

8. A cooker top plate comprising:
a glass substrate having a cooking surface on which a cooking utensil is to be put and a back surface on an opposite side to the cooking surface; and
a decorative layer disposed on the cooking surface side of the glass substrate,
wherein the decorative layer contains a glass and a pigment,
the pigment contains a color pigment other than titanium oxide, and
a surface of the decorative layer has an arithmetic mean roughness Ra of less than 0.61 µm.

9. A method for manufacturing the cooker top plate according to claim 1 or 2, the method comprising the steps of:
preparing a glass substrate having a cooking surface on which a cooking utensil is to be put and a back surface on an opposite side to the cooking surface;
applying to the cooking surface of the glass substrate a paint containing a glass frit and a pigment, the pigment containing an extender pigment with an average particle diameter of not more than 1.5 µm and being substantially free of titanium oxide; and
heating the glass substrate to which the paint is applied, thus forming a decorative layer.
